# EUROPEAN PATENT APPLICATION

(11) **EP 4 424 751 A1**
(43) Date of publication of application: **04.09.2024**
(21) Application number: 22887051.5
(22) Date of filing: 26.10.2022
(51) Int. Cl.: C08G 81/00

(54) **POLYAMIDE BLOCK COPOLYMER**

(30) Priority: 26.10.2021 JP 2021174525
(71) Applicant: Kuraray Co., Ltd., Kurashiki-shi, Okayama 710-0801 (JP)
(72) Inventor: MINAMIGUCHI, Daiki, Tsukuba-shi, Ibaraki 305-0841 (JP)
(74) Representative: Müller-Boré & Partner Patentanwälte PartG mbB
(86) International application number: PCT/JP2022/039866
(87) International publication number: WO 2023/074726

(57) **Abstract**

Provided is a polyamide block copolymer comprising: a polymer block (A) comprising 50 mol% or more of a constituent unit derived from polyamide; and a polymer block (B) comprising 50 mol% or more of a constituent unit derived from at least one selected from the group consisting of polyether and polyester, in which the polymer block (B) has a glass transition temperature of 20°C or lower and the polyamide block copolymer has a melting point of 230°C or higher.

## Description

### Technical Field

The present invention relates to a polyamide block copolymer.

### Background Art

Thermoplastic elastomers can be melt-molded and are used in a wide range of fields such as automotive interior and exterior material parts, electronic device material parts, sports goods.

Thermoplastic elastomers contain a soft segment exhibiting flexibility and a hard segment exhibiting a cross-linking point and are classified into, for example, olefin-based, amide-based, urethane-based, ester-based, acrylic-based, and styrene-based. The thermoplastic elastomer can exhibit physical properties such as good mechanical strength, abrasion resistance, heat resistance, and oil resistance according to the above classification. For example, thermoplastic elastomers such as amide-based, urethane-based, and ester-based thermoplastic elastomers tend to exhibit relatively good heat resistance. However, further improvement of physical properties according to applications is required in each field, and in order to satisfy this requirement, studies have been conducted to improve the physical properties of thermoplastic elastomers.

For example, PTL 1 discloses a polyamide block copolymer obtained by polymerizing a dicarboxylic acid, a diamine, and a polyether diamine and/or a polyether dicarboxylic acid for the purpose of exhibiting excellent heat resistance and low-temperature properties. In addition, PTL 2 discloses a polyether polyamide elastomer in which a diamine constituent unit is derived from a polyether diamine compound (A-1) having a specific structure and a xylylenediamine (A-2) and a dicarboxylic acid constituent unit is derived from an α,ω-linear aliphatic dicarboxylic acid having 4 to 20 carbon atoms, for the purpose of exhibiting excellent heat resistance, melt moldability, crystallinity, and flexibility. In addition, PTL 3 discloses a copolymer of a rigid polyamide block and a flexible polyether block or polyester block for the purpose of exhibiting excellent optical properties and mechanical properties. PTL 3 discloses that the polyamide block is semi-crystalline and is composed of a copolyamide of X. X'/Y Z type, in which (i) X. X' is a pair of aliphatic diamine. diacid, (ii) Y is an alicyclic diamine, and (iii) Z is an aliphatic and/or aromatic dicarboxylic acid. In addition, PTL 4 discloses a molding material containing a polyether amide based on a linear aliphatic diamine having 6 to 12 carbon atoms, a linear aliphatic or aromatic dicarboxylic acid having 6 to 12 carbon atoms, and a polyether diamine for the purpose of exhibiting thermoforming stability and hydrolytic stability.

### Citation List

### Patent Literature

PTL 1: JP 2000-154248 A
PTL 2: WO 2012/111636 A1
PTL 3: JP 2020-519719 T
PTL 4: JP 2003-246926 A

### Summary of Invention

### Technical Problem

Although the techniques disclosed in the above-mentioned patent documents are excellent in heat resistance to some extent, they are not satisfactory depending on applications, and there is room for improving the heat resistance. Further, there is a demand for a polyamide block copolymer having, in addition to the excellent heat resistance of polyamide, flexibility that enables molding processing and excellent tensile properties.

Therefore, an object of the present invention is to provide a polyamide block copolymer excellent in heat resistance and flexibility.

### Solution to Problem

As a result of intensive studies to solve the above problems, the present inventor has conceived the following present invention and found that the problems can be solved.

In other words, the present invention is as follows.

[1] A polyamide block copolymer comprising: a polymer block (A) comprising 50 mol% or more of a constituent unit derived from polyamide; and a polymer block (B) comprising 50 mol% or more of a constituent unit derived from at least one selected from the group consisting of polyether and polyester, in which the polymer block (B) has a glass transition temperature of 20°C or lower and the polyamide block copolymer has a melting point of 230°C or higher.
[2] The polyamide block copolymer as set forth in [1], in which the polyamide is a semi-aromatic polyamide.
[3] The polyamide block copolymer as set forth in [2], in which the semi-aromatic polyamide comprises a diamine unit having an aliphatic diamine unit as a main component and a dicarboxylic acid unit having an aromatic dicarboxylic acid unit as a main component.
[4] The polyamide block copolymer as set forth in [2] or [3], in which the semi-aromatic polyamide comprises a diamine unit derived from an aliphatic diamine having 4 to 18 carbon atoms in an amount of 30 mol% or more with respect to the total diamine units.
[5] The polyamide block copolymer as set forth in any one of [2] to [4], in which the semi-aromatic polyamide comprises a diamine unit derived from at least one selected from the group consisting of 1,9-nonanediamine and 2-methyl-1,8-octanediamine.
[6] The polyamide block copolymer as set forth in any one of [2] to [5], in which the semi-aromatic polyamide comprises a dicarboxylic acid unit derived from at least one selected from the group consisting of terephthalic acid, 1,4-naphthalenedicarboxylic acid, 2,6-naphthalenedicarboxylic acid, and 2,7-naphthalenedicarboxylic acid.
[7] The polyamide block copolymer as set forth in any one of [1] to [6], in which the polymer block (B) comprises a constituent unit derived from a polyether diamine.
[8] The polyamide block copolymer as set forth in any one of [1] to [7], in which the polymer block (A) has an active terminal functional group content of 50 to 5,000 µmol/g.
[9] The polyamide block copolymer as set forth in any one of [1] to [8], in which the polymer block (A) has a weight average molecular weight of 1,000 to 50,000.
[10] The polyamide block copolymer as set forth in any one of [1] to [9], having a weight average molecular weight of 40,000 to 200,000.
[11] The polyamide block copolymer as set forth in any one of [1] to [10], in which a tensile elongation at break measured in accordance with JIS K 7161-1:2014 is 30% or more.
[12] A polyamide block copolymer composition comprising the polyamide block copolymer as set forth in any one of [1] to [11].
[13] A molded article comprising the polyamide block copolymer as set forth in any one of [1] to [11] or the polyamide block copolymer composition as set forth in [12].
[14] A method for producing the polyamide block copolymer as set forth in [1], the method comprising mixing and polymerizing a polymer constituting a polymer block (A) comprising 50 mol% or more of a constituent unit derived from a polyamide and a polymer constituting a polymer block (B) comprising 50 mol% or more of a constituent unit derived from at least one selected from the group consisting of a polyether and a polyester.

### Advantageous Effects of Invention

According to the present invention, a polyamide block copolymer having excellent heat resistance and flexibility can be provided.

### Description of Embodiments

Hereinafter, a description will be given based on an example of an embodiment of the present invention. However, the embodiments described below are examples for embodying the technical idea of the present invention, and the present invention is not limited to the following description.

In addition, in the description herein, preferred embodiments are shown, but a combination of two or more of individual preferred embodiments is also a preferred embodiment. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

Further, in the description herein, "- unit" (in which "-" represents a monomer) means "constituent unit derived from -", for example, "dicarboxylic acid unit" means "constituent unit derived from dicarboxylic acid", and "diamine unit" means "constituent unit derived from diamine".

The polyamide block copolymer of the present embodiment comprises a polymer block (A) comprising 50 mol% or more of a constituent unit derived from polyamide and a polymer block (B) comprising 50 mol% or more of a constituent unit derived from at least one selected from the group consisting of polyether and polyester, and is characterized in that the glass transition temperature of the polymer block (B) is 20°C or lower and the melting point of the polyamide block copolymer is 230°C or higher.

The polyamide block copolymer of the present embodiment is a copolymer containing polyamide as the polymer block (A) and polyether and/or polyester as the polymer block (B).

The polyamide block copolymer of the present embodiment can exhibit both excellent heat resistance of the polyamide and excellent flexibility of the polyether and/or the polyester by containing the specific polyamide and the specific polyether and/or polyester as the respective polymer blocks.

On the other hand, for example, in the polyamide block copolymer of PTL 1, sufficient heat resistance and mechanical strength cannot be obtained. This is considered to be caused by the fact that since the monomers and oligomers constituting the hard segment and the soft segment are collectively polymerized, a polymer block capable of sufficiently exhibiting each physical property of the hard segment and the soft segment is not formed.

### <Polymer Block (A)>

The polymer block (A) contains 50 mol% or more of a constituent unit derived from a polyamide. From the viewpoint that further excellent heat resistance is easily obtained, the polymer block (A) contains a constituent unit derived from a polyamide in an amount of preferably 70 mol% or more, more preferably 90 mol% or more, or can contain 100 mol%. In the polymer block (A), constituent units other than the constituent unit derived from a polyamide are not limited as long as the effect of the present invention can be obtained.

The polyamide that can be used in the present embodiment is not limited as long as the effect of the present invention can be obtained, and examples thereof include a semi-aromatic polyamide, a wholly aromatic polyamide, and an aliphatic polyamide.

Among these, as a polyamide in which the effect of the present invention is more remarkably exhibited, a semi-aromatic polyamide and an aliphatic polyamide are exemplified. From the viewpoint that more excellent heat resistance is easily obtained, it is particularly preferable to use a semi-aromatic polyamide as the polyamide.

Examples of the aliphatic polyamide include polytetramethylene adipamide (polyamide 46) and polyhexamethylene adipamide (polyamide 66).

The semi-aromatic polyamide that can be suitably used in the present embodiment will be described in detail below.

### [Semi-Aromatic Polyamide]

The semi-aromatic polyamide refers to a polyamide containing a diamine unit having an aliphatic diamine unit as a main component and a dicarboxylic acid unit having an aromatic dicarboxylic acid unit as a main component, or a polyamide resin containing a dicarboxylic acid unit having an aliphatic dicarboxylic acid unit as a main component and a diamine unit having an aromatic diamine unit as a main component. Here, "having as a main component" refers to constituting 50 to 100 mol%, and preferably 60 to 100 mol% in all units.

In the present embodiment, the semi-aromatic polyamide preferably contains a diamine unit having an aliphatic diamine unit as a main component and a dicarboxylic acid unit having an aromatic dicarboxylic acid unit as a main component from the viewpoint of more excellent heat resistance.

### (Aliphatic Diamine Unit)

The semi-aromatic polyamide preferably contains a diamine unit derived from an aliphatic diamine having 4 to 18 carbon atoms in an amount of 30 mol% or more, more preferably 30 to 100 mol%, still more preferably 50 to 100 mol%, even more preferably 70 to 100 mol%, and yet still more preferably 90 to 100 mol%, or may contain 100 mol%, with respect to the total diamine units, from the viewpoint that the polymerization reaction with the dicarboxylic acid progresses favorably and the semi-aromatic polyamide is advantageous in improving physical properties such as heat resistance and flexibility.

In addition, as the aliphatic diamine used in the diamine unit, an aliphatic diamine having 4 to 16 carbon atoms is more preferable, an aliphatic diamine having 4 to 12 carbon atoms is still more preferable, an aliphatic diamine having 6 to 12 carbon atoms is even more preferable, and an aliphatic diamine having 6 to 10 carbon atoms is yet still more preferable.

Examples of the aliphatic diamine having 4 to 18 carbon atoms include:
linear aliphatic diamines such as 1,4-butane diamine, 1,5-pentane diamine, 1,6-hexane diamine (hexamethylene diamine), 1,7-heptane diamine, 1,8-octane diamine, 1,9-nonane diamine, 1,10-decane diamine, 1,11-undecane diamine, 1,12-dodecane diamine, 1,13-tridecane diamine, 1,14-tetradecane diamine, 1,15-pentadecane diamine, 1,16-hexadecane diamine, 1,17-heptadecane diamine, and 1,18-octadecane diamine;
branched aliphatic diamines such as 1-butyl-1,2-ethanediamine, 1,1-dimethyl-1,4-butanediamine, 1-ethyl-1,4-butanediamine, 2-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-ethyl-1,5-pentanediamine, 2-propyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-ethyl-1,6-hexanediamine, 2-propyl-1,6-hexanediamine, 2,4-diethyl-1,6-hexanediamine, 2-ethyl-1,7-heptanediamine, 2-propyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, 2-methyl-1,9-nonanediamine, and 5-methyl-1,9-nonanediamine; and
alicyclic diamines such as 1,2-cyclohexanediamine, 1,4-cyclohexanediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, and bis(aminopropyl)piperazine. These may be used alone or in combination of two or more thereof.

As the aliphatic diamine, from the viewpoint of heat resistance, at least one selected from the group consisting of a linear aliphatic diamine and a branched aliphatic diamine is preferably used, and the linear aliphatic diamine and the branched aliphatic diamine are more preferably used in combination.

The semi-aromatic polyamide preferably contains a diamine unit derived from at least one selected from the group consisting of 1,4-butanediamine, 1,6-hexanediamine, 1,9-nonanediamine, 2-propyl-1,6-hexanediamine, 2-ethyl-1,7-heptanediamine, 2-methyl-1,8-octanediamine, 1,10-decanediamine, 1,11-undecanediamine, and 1,12-dodecanediamine from the viewpoint that the effect of the present invention is more remarkably exerted and the raw material availability is excellent, more preferably contains a diamine unit derived from at least one selected from the group consisting of 1,9-nonanediamine and 2-methyl-1,8-octanediamine, and still more preferably uses both 1,9-nonanediamine and 2-methyl-1,8-octanediamine in combination from the viewpoint of molding processability. The content of the 1,9-nonanediamine unit and/or the 2-methyl-1,8-octanediamine unit in the total amount of diamine units constituting the semi-aromatic polyamide is preferably 50 to 100 mol%, more preferably 60 to 100 mol%, still more preferably 75 to 100 mol%, and even more preferably 90 to 100 mol%. When the content of the 1,9-nonanediamine unit and/or the 2-methyl-1,8-octanediamine unit in the total amount of diamine units constituting the semi-aromatic polyamide is within the above range, heat resistance is further improved and excellent chemical resistance can also be expected.

When 1,9-nonanediamine and 2-methyl-1,8-octanediamine are used in combination, the molar ratio of 1,9-nonanediamine: 2-methyl-1,8-octanediamine is preferably 99:1 to 1:99, more preferably 95:5 to 5:95, still more preferably 90:10 to 10:90, even more preferably 85:15 to 15:85, yet still more preferably 80:20 to 20:80, yet even more preferably 70:30 to 30:70, and particularly preferably 65:35 to 35:65. When the molar ratio of 1,9-nonanediamine to 2-methyl-1,8-octanediamine is within the above range, the polymerization reaction with the polymer block (B) progresses well, and excellent heat resistance and flexibility can be expected in the obtained polyamide block copolymer.

In addition, the semi-aromatic polyamide may contain, as the diamine unit, a constituent unit derived from a diamine other than the aliphatic diamine, such as an aromatic diamine, as long as the effect of the present invention is not impaired. The constituent unit derived from a diamine other than the aliphatic diamine may be contained singly, or two or more kinds thereof may be contained.

The content of the constituent unit derived from a diamine other than the aliphatic diamine in the diamine units is preferably 30 mol% or less, more preferably 20 mol% or less, still more preferably 10 mol% or less, and even more preferably 5 mol% or less.

### (Aromatic Dicarboxylic Acid Unit)

Examples of the aromatic dicarboxylic acid unit include aromatic dicarboxylic acid units derived from isophthalic acid, terephthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid, from the viewpoint that a polymerization reaction with a diamine favorably proceeds and it is advantageous for improving physical properties such as heat resistance.

The semi-aromatic polyamide preferably contains a dicarboxylic acid unit derived from at least one selected from the group consisting of terephthalic acid, 1,4-naphthalenedicarboxylic acid, 2,6-naphthalenedicarboxylic acid, and 2,7-naphthalenedicarboxylic acid from the viewpoint that the effect of the present invention is more remarkably exhibited, and more preferably contains a dicarboxylic acid unit derived from at least one selected from the group consisting of terephthalic acid and 2,6-naphthalenedicarboxylic acid from the viewpoint that heat resistance is further improved.

These aromatic dicarboxylic acid units may be used alone or in combination of two or more thereof.

From the viewpoint of heat resistance and mechanical strength, the content of the dicarboxylic acid unit derived from at least one selected from the group consisting of terephthalic acid and 2,6-naphthalenedicarboxylic acid in the total amount of the dicarboxylic acid units constituting the semi-aromatic polyamide is preferably 30 mol% or more, more preferably 30 to 100 mol%, still more preferably 50 to 100 mol%, even more preferably 70 to 100 mol%, and yet still more preferably 90 to 100 mol%, or may be 100 mol%.

In addition, the semi-aromatic polyamide may contain, as the dicarboxylic acid unit, a constituent unit derived from a dicarboxylic acid other than the aromatic dicarboxylic acid, such as an aliphatic dicarboxylic acid, as long as the effect of the present invention is not impaired. The constituent unit derived from a dicarboxylic acid other than the aromatic dicarboxylic acid may be contained singly, or two or more kinds thereof may be contained.

Examples of the aliphatic dicarboxylic acid include linear aliphatic dicarboxylic acids such as oxalic acid, malonic acid, succinic acid, glutaric acid, adipic acid, pimelic acid, suberic acid, azelaic acid, sebacic acid, undecanedicarboxylic acid, dodecanedicarboxylic acid, and dimethylmalonic acid; branched aliphatic dicarboxylic acids such as 2,2-diethylsuccinic acid, 2,2-dimethylglutaric acid, 2-methyladipic acid, and trimethyladipic acid; and alicyclic dicarboxylic acids such as 1,3-cyclopentanedicarboxylic acid and 1,4-cyclohexanedicarboxylic acid.

The content of the constituent unit derived from a dicarboxylic acid other than the aromatic dicarboxylic acid in the dicarboxylic acid unit is preferably 30 mol% or less, more preferably 20 mol% or less, still more preferably 10 mol% or less, and even more preferably 5 mol% or less.

The content of the unit derived from the aliphatic diamine having 4 to 18 carbon atoms is preferably 15 to 55 mol%, and more preferably 25 to 55 mol%, with respect to all the constituent units constituting the semi-aromatic polyamide.

The content of the unit derived from the aromatic dicarboxylic acid is preferably 15 to 55 mol%, and more preferably 25 to 55 mol%, with respect to all the constituent units constituting the semi-aromatic polyamide.

The total content of the units derived from the aliphatic diamine having 4 to 18 carbon atoms and the aromatic dicarboxylic acid with respect to all the constituent units constituting the semi-aromatic polyamide is preferably 30 to 100 mol%, more preferably 50 to 100 mol%, and still more preferably 70 to 100 mol%, or may be 90 mol% or more or even 100 mol%.

### (Other Constituent Units)

In addition, the semi-aromatic polyamide may contain constituent units other than the diamine unit and the dicarboxylic acid unit as long as the effect of the present invention is not impaired. Examples of the other constituent units include a polyvalent carboxylic acid unit, an aminocarboxylic acid unit, and a lactam unit.

Examples of the polyvalent carboxylic acid unit include constituent units derived from polyvalent carboxylic acids having 3 or more valences such as trimellitic acid, trimesic acid, and pyromellitic acid. These polyvalent carboxylic acid units can be contained within a range in which melt molding is possible.

Examples of the aminocarboxylic acid unit include constituent units derived from lactams such as caprolactam and lauryl lactam; and aminocarboxylic acids such as 11-aminoundecanoic acid and 12-aminododecanoic acid.

Examples of the lactam unit include constituent units derived from ε-caprolactam, enantholactam, undecanelactam, lauryllactam, α-pyrrolidone, and α-piperidone.

The content of the other constituent units is preferably 30 mol% or less, and more preferably 10 mol% or less, with respect to all the constituent units constituting the semi-aromatic polyamide.

Typical examples of the semi-aromatic polyamide containing a diamine unit having an aliphatic diamine unit as a main component and a dicarboxylic acid unit having an aromatic dicarboxylic acid unit as a main component include polytetramethylene terephthalamide (polyamide 4T), polypentamethylene terephthalamide (polyamide 5T), polyhexamethylene terephthalamide (polyamide 6T), polynonamethylene terephthalamide (polyamide 9T), poly(2-methyloctamethylene) terephthalamide (polyamide M8T), polynonamethylene terephthalamide/poly(2-methyloctamethylene) terephthalamide copolymer (polyamide 9T/M8T), polynonamethylene naphthalene dicarboxamide (polyamide 9N), poly (2-methyloctamethylene) naphthalene dicarboxamide (polyamide M8N), polynonamethylene naphthalene dicarboxamide/poly(2-methyloctamethylene) naphthalene dicarboxamide copolymer (polyamide 9N/M8N), polydecamethylene terephthalamide (polyamide 10T), polyhexamethylene isophthalamide (polyamide 6I), a copolymer of polyamide 6I and polyamide 6T (polyamide 6I/6T), a copolymer of polyamide 66, polyamide 6I and polyamide 6T (polyamide 66/polyamide 6I/6T), a copolymer of polyamide 6T and polyundecanamide (polyamide 11) (polyamide 6T/11), a copolymer of polyamide 6T and polyamide 10T (polyamide 6T/10T), and a copolymer of polyamide 10T and polyundecanamide (polyamide 11) (polyamide 10T/11).

### [Terminal Blocking Agent]

In the present embodiment, the polyamide contained in the polymer block (A) may contain a constituent unit derived from a terminal blocking agent.

The content of the constituent unit derived from the terminal blocking agent is preferably 1.0 to 10 mol%, more preferably 2.0 to 7.5 mol%, and still more preferably 2.5 to 6.5 mol% with respect to the diamine unit.

The content of the constituent unit derived from the terminal blocking agent can be adjusted by the charged amount of the terminal blocking agent with respect to the diamine at the time of charging the polymerization raw material. It is desirable to finely adjust the charged amount of the terminal blocking agent at the time of charging the polymerization raw material so that a desired amount of the constituent unit derived from the terminal blocking agent is introduced into the obtained resin in consideration of the fact that the monomer component is volatilized during polymerization. In addition, when the polymer constituting the polymer block (A) and the polymer constituting the polymer block (B) are polymerized, a terminal blocking agent may be charged so as to be in the above-described desired range. In addition, a terminal blocking agent may be charged into the polymer constituting the polymer block (A) together with a terminal functionalizing agent described later so as to be in the above-described desired range.

Examples of a method for obtaining the content of the constituent unit derived from the terminal blocking agent in the polyamide include a method in which a solution viscosity is measured, a total terminal group amount is calculated from a relational expression between the solution viscosity and a number average molecular weight, and an amino group amount and a carboxy group amount obtained by titration are subtracted from the total terminal group amount, as disclosed in JP H07-228690 A.

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monoalcohols, and monoamines. From the viewpoint of reactivity and stability of the blocked terminal, a monocarboxylic acid is preferable as the terminal blocking agent for the terminal amino group, and a monoamine is preferable as the terminal blocking agent for the terminal carboxy group. From the viewpoint of ease of handling and the like, a monocarboxylic acid is more preferable as the terminal blocking agent.

The monocarboxylic acid used as the terminal blocking agent is not particularly limited as long as it has reactivity with an amino group. Examples of the monocarboxylic acid include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and arbitrary mixtures thereof. Among these, at least one selected from acetic acid, propionic acid, butyric acid, valeric acid, caproic acid, caprylic acid, lauric acid, tridecanoic acid, myristic acid, palmitic acid, stearic acid, and benzoic acid is preferable from the viewpoints of reactivity, stability of the blocked terminal, price, and the like.

The monoamine used as the terminal blocking agent is not particularly limited as long as it has reactivity with a carboxy group. Examples of the monoamine include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, at least one selected from butylamine, hexylamine, octylamine, decylamine, stearylamine, cyclohexylamine, and aniline is preferable from the viewpoints of reactivity, a high boiling point, stability of the blocked terminal, price, and the like.

### [Method for Producing Polyamide]

When the polyamide is a semi-aromatic polyamide containing a dicarboxylic acid unit and a diamine unit, the semi-aromatic polyamide can be produced, for example, by a method such as a melt polymerization method, a solid phase polymerization method, or a melt extrusion polymerization method using a dicarboxylic acid and a diamine as raw materials. Specifically, the semi-aromatic polyamide can be produced as follows.

First, a diamine, a dicarboxylic acid, and, if necessary, an aminocarboxylic acid, a lactam, a catalyst, a terminal blocking agent and the like are mixed to produce a nylon salt. Next, the produced nylon salt is heated to a temperature of 200 to 250°C and subjected to thermal polymerization, whereby a semi-aromatic polyamide can be obtained as a prepolymer.

Furthermore, the molecular weight of the semi-aromatic polyamide can be adjusted to a desired molecular weight by subjecting the prepolymer to solid phase polymerization or by using a melt extruder to increase the degree of polymerization.

When the step of increasing the degree of polymerization is carried out by a solid phase polymerization method, it is preferable to carry out the step under reduced pressure or in a flow of an inert gas, and in a case where the polymerization temperature is in a range of 200 to 280°C, the polymerization rate is large, productivity is excellent, and coloring and gelation can be effectively suppressed. Further, when the step of increasing the degree of polymerization is carried out by a melt extruder, the polymerization temperature is preferably 370°C or lower, and when the polymerization is performed under such conditions, a semi-aromatic polyamide with almost no decomposition and little deterioration can be obtained.

Examples of the catalyst that can be used in producing the semi-aromatic polyamide include phosphoric acid, phosphorous acid, hypophosphorous acid, and salts or esters thereof. Examples of the salts or esters include salts of phosphoric acid, phosphorous acid, or hypophosphorous acid with metals such as potassium, sodium, magnesium, vanadium, calcium, zinc, cobalt, manganese, tin, tungsten, germanium, titanium, and antimony; ammonium salts of phosphoric acid, phosphorous acid, or hypophosphorous acid; and ethyl esters, isopropyl esters, butyl esters, hexyl esters, isodecyl esters, octadecyl esters, decyl esters, stearyl esters, and phenyl esters of phosphoric acid, phosphorous acid, or hypophosphorous acid.

The amount of the catalyst used is preferably 0.01% by mass or more, and more preferably 0.05% by mass or more, with respect to 100% by mass of the total mass of the raw materials of the semi-aromatic polyamide. On the other hand, the amount of the catalyst used is preferably 1.0% by mass or less, and more preferably 0.5% by mass or less. When the amount of the catalyst used is at least the above lower limit value, the polymerization proceeds more favorably.

### [Terminal Amino Group Content (before terminal conversion)]

In the present embodiment, the terminal of the polyamide can be adjusted to a desired functional group or a desired amount of the functional group by a terminal functionalizing agent to be described later.

On the other hand, the terminal amino group content as used herein is the terminal amino group content in the polyamide before the terminal conversion with the terminal functionalizing agent.

The terminal amino group content ([NH₂]), which is the terminal amino group content of the polyamide before the terminal conversion, is preferably 1 to 4,000 µmol/g, more preferably 1 to 3,000 µmol/g, still more preferably 1 to 2,500 µmol/g, and even more preferably 1 to 2,000 µmol/g.

The terminal amino group content ([NH₂]) as used herein refers to the amount (unit: µmol) of terminal amino groups contained in 1 g of the polyamide, and can be determined by a neutralization titration method using an indicator.

### [Terminal Carboxy Group Content (before terminal conversion)]

The terminal carboxy group content ([COOH]), which is the terminal carboxy group content of the polyamide before the terminal conversion, is preferably 1 to 5,000 µmol/g, more preferably 25 to 4,000 µmol/g, still more preferably 50 to 3,000 µmol/g, and even more preferably 75 to 2,500 µmol/g.

The terminal carboxy group content ([COOH]) as used herein refers to the amount (unit: µmol) of terminal carboxy groups contained in 1 g of the polyamide, and can be determined by a potentiometric titration method.

### [Melting Point]

The melting point of the polyamide is preferably 230°C or higher, more preferably 240°C or higher, and still more preferably 250°C or higher. When the melting point of the polyamide is 230°C or higher, it is easy to further improve the heat resistance of the polyamide block copolymer. The upper limit of the melting point of the polyamide is not particularly limited, but is preferably 320°C or lower from the viewpoint of moldability and the like. That is, the melting point of the polyamide is preferably 230°C or higher and 320°C or lower.

In the present invention, the melting point can be determined as a peak temperature of a melting peak appearing when the temperature is increased at a rate of 10°C/min using a differential scanning calorimetry (DSC) apparatus. More specifically, the melting point can be obtained by a method described in Examples described later.

### [Molecular Weight]

The number average molecular weight of the polymer block (A) is preferably 300 to 12,000, more preferably 300 to 11,000, still more preferably 350 to 10,000, even more preferably 400 to 9,000, and yet still more preferably 400 to 8,000, or may be 400 to 7,000, or may be 400 to 6,000. When the number average molecular weight is within the above numerical range, the compatibility between the polymer block (A) and the polymer block (B) is excellent, and the heat resistance of the polyamide block copolymer can be further improved.

The weight average molecular weight of the polymer block (A) is preferably 1,000 to 50,000, more preferably 1,100 to 45,000, still more preferably 1,200 to 40,000, even more preferably 1,300 to 40,000, and yet still more preferably 1,400 to 36,000, or may be 1,400 to 25,000, or may be 1,400 to 20,000. When the weight average molecular weight is within the above range, the compatibility between the polymer block (A) and the polymer block (B) is excellent, and the heat resistance of the polyamide block copolymer can be further improved.

In the present invention, the number average molecular weight and the weight average molecular weight can be measured by gel permeation chromatography, and more specifically, are values measured by a method described in Examples.

### [Terminal Functionalizing Agent]

In the present embodiment, a terminal functionalizing agent can be used in order to obtain a polymer block (A) containing a polyamide having a desired functional group or a desired amount of the functional group at the terminal.

For example, a prepolymer of the polyamide described above can be reacted with a terminal functionalizing agent to convert the terminal of the polyamide. In addition, it is also possible to convert the terminal of the polyamide by making one of the dicarboxylic acid unit and the diamine unit excessive at the stage of charging raw materials. By adjusting the terminal of the polymer block (A) to a desired functional group or a desired amount of the functional group, the polymer block (A) and the polymer block (B) can be more favorably bonded. The unit derived from the terminal functionalizing agent is contained in the polymer block (A).

Further, when the polyamide obtained by the above-described method for producing a polyamide has a desired functional group or a desired amount of the functional group, the terminal functionalizing agent may not be used. That is, in this case, by reacting the polyamide with at least one selected from the group consisting of polyether and polyester without using a terminal functionalizing agent, it is possible to obtain a polyamide block copolymer in which the polymer block (A) and the polymer block (B) are favorably bonded.

Note that the amount of the active terminal functional group of the polyamide described later can be adjusted, for example, by adjusting the amount of the carboxy group and the amount of the amino group contained in the reaction raw materials in the production of the polyamide.

The terminal functionalizing agent is not particularly limited as long as the effect of the present invention is not impaired, and examples thereof include those capable of introducing a functional group such as a hydroxy group, a carboxy group, an amino group, an epoxy group, a mercapto group, a sulfonyl group, a halogen atom, a vinyl group, or a vinylidene group into the terminal of the polyamide.

In the present embodiment, it is preferable to use a dicarboxylic acid and a diamine as the terminal functionalizing agent.

Examples of the dicarboxylic acid that can be used as the terminal functionalizing agent include an aliphatic dicarboxylic acid and an aromatic dicarboxylic acid.

Examples of the aliphatic dicarboxylic acid include linear aliphatic dicarboxylic acids such as oxalic acid, malonic acid, succinic acid, glutaric acid, adipic acid, pimelic acid, suberic acid, azelaic acid, sebacic acid, undecanedicarboxylic acid, dodecanedicarboxylic acid, and dimethylmalonic acid; branched aliphatic dicarboxylic acids such as 2,2-diethylsuccinic acid, 2,2-dimethylglutaric acid, 2-methyladipic acid, and trimethyladipic acid; and alicyclic dicarboxylic acids such as 1,3-cyclopentanedicarboxylic acid and 1,4-cyclohexanedicarboxylic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulphone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2, 3-furandicarboxylic acid, 2,4-furandicarboxylic acid, 2,5-furandicarboxylic acid, and 3,4-furandicarboxylic acid.

Examples of the diamine that can be used as the terminal functionalizing agent include an aliphatic diamine and an aromatic diamine.

Examples of the aliphatic diamine include:
linear aliphatic diamines such as ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecandiamine, 1,15-pentadecanediamine, 1,16-hexadecandiamine, 1,17-heptadecanediamine, and 1,18-octadecandiamine;
branched aliphatic diamines such as 1,2-propanediamine, 1-butyl-1,2-ethanediamine, 1,1-dimethyl-1,4-butanediamine, 1-ethyl-1,4-butanediamine, 2-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-ethyl-1,5-pentanediamine, 2-propyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-ethyl-1,6-hexanediamine, 2-propyl-1,6-hexanediamine, 2,4-diethyl-1,6-hexanediamine, 2-ethyl-1,7-heptanediamine, 2-propyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, 2-methyl-1,9-nonanediamine, and 5-methyl-1,9-nonanediamine; and
alicyclic diamines such as 1,2-cyclohexanediamine, 1,4-cyclohexanediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, and bis(aminopropyl)piperazine.

Examples of the aromatic diamine include p-phenylenediamine, m-phenylenediamine, p-xylylenediamine, m-xylylenediamine, 4,4'-diaminodiphenyl methane, 4,4'-diaminodiphenyl sulfone, 4,4'-diaminodiphenyl ether, and 4,4'-methylenedi-2,6-diethylaniline.

The above-mentioned terminal functionalizing agent may be used alone or in combination of two or more thereof.

### (Active Terminal Functional Group Content)

In the present invention, the "active terminal functional group content" is the content of the active terminal functional group of the polymer block (A) contained in the polyamide block copolymer, and the total content of the active terminal functional groups of the polyamide is the active terminal functional group content of the polymer block (A). The "active terminal functional group" is a functional group exhibiting reaction activity with respect to the terminal functional group of the polymer block (B), and examples thereof include an amino group and a carboxy group.

In the case where the terminal of the polyamide is converted using a terminal functionalizing agent, the "active terminal functional group content" is the content of the active terminal functional group after the conversion of the terminal functional group. For example, when a polyamide having an amino group at the terminal is converted into a carboxy group using a terminal functionalizing agent, the total content of the terminal carboxy group after the conversion and the terminal amino group that is not converted is amounted to the active terminal functional group content of the polymer block (A).

The active terminal functional group content of the polymer block (A) is preferably 50 to 5,000 µmol/g, more preferably 75 to 4,500 µmol/g, still more preferably 100 to 4,000 µmol/g, and even more preferably 120 to 4,000 µmol/g. When the active terminal functional group content is 50 µmol/g or more, the compatibility between the polymer block (A) and the polymer block (B) is excellent, and the flexibility of the polyamide block copolymer can be further improved. On the other hand, when the active terminal functional group content is 5,000 µmol/g or less, the heat resistance of the polyamide block copolymer can be further improved.

The active terminal functional group content as used herein refers to the amount (unit: µmol) of active terminal functional groups contained in 1 g of the polyamide (in a case where a terminal functionalizing agent is used, the polyamide after conversion), and can be determined by a neutralization titration method using an indicator and a potentiometric titration method. Specifically, the active terminal functional group content can be calculated by a method described in Examples described later.

### <Polymer Block (B)>

The polymer block (B) contains 50 mol% or more of a constituent unit derived from at least one selected from the group consisting of a polyether and a polyester. From the viewpoint that more excellent flexibility is easily obtained, the polymer block (B) contains a constituent unit derived from at least one selected from the group consisting of a polyether and a polyester in an amount of preferably 70 mol% or more, and more preferably 90 mol% or more, or can contain 100 mol%. In the polymer block (B), the constituent unit other than the constituent unit derived from at least one selected from the group consisting of a polyether and a polyester is not limited as long as the effect of the present invention can be obtained.

The glass transition temperature of the polymer block (B) is 20°C or lower. When the glass transition temperature exceeds 20°C, it becomes difficult for the polyamide block copolymer to have excellent flexibility.

The glass transition temperature of the polymer block (B) is preferably 0°C or lower, more preferably -20°C or lower, from the viewpoint that excellent flexibility is easily expressed in the polyamide block copolymer at room temperature.

In the present invention, the glass transition temperature can be determined as a temperature at an inflection point appearing when the temperature is increased at a rate of 2°C/min using a differential scanning calorimetry (DSC) apparatus. More specifically, the glass transition temperature can be obtained by a method described in Examples described later. Alternatively, as the glass transition temperature, a literature value or a measurement result of a manufacturer can be adopted.

### [Polyether]

As the polyether, for example, polyether diamine, polyether dicarboxylic acid and the like can be used. Among them, polyether diamine is preferable from the viewpoint that more excellent flexibility is imparted to the polyamide block copolymer having the polymer block (A) as a hard segment and excellent chemical resistance can be expected to be exhibited in the polyamide block copolymer. The polyether may be used alone or in combination of two or more thereof.

The polyether diamine may have an amino group at both terminals of the polyether.

Examples of the polyether diamine include a polyether diamine having an amino group at two terminals of polyethylene glycol (PEG), polypropylene glycol (PPG), polytrimethylene ether glycol (PO3G), poly(oxybutylene) glycol, polytetramethylene ether glycol (PTMG), poly(3-alkyltetrahydrofuran), particularly poly(3-methyltetrahydrofuran) (poly(3MeTHF)), polypentamethylene ether glycol, polyhexamethylene ether glycol, polyoctamethylene ether glycol, or a copolymer thereof, and the like. These may be used alone or in combination of two or more thereof. Such polyether diamines can be obtained, for example, by cyanoacetylation of polyether diols.

The polyether dicarboxylic acid may have a carboxy group at both terminals of the polyether.

Examples of the polyether dicarboxylic acid include a polyether dicarboxylic acid having a carboxy group at two terminals of polyethylene glycol (PEG), polypropylene glycol (PPG), polytrimethylene ether glycol (PO3G), poly(oxybutylene) glycol, polytetramethylene ether glycol (PTMG), poly(3-alkyltetrahydrofuran), particularly poly(3-methyltetrahydrofuran) (poly(3MeTHF)), polypentamethylene ether glycol, polyhexamethylene ether glycol, polyoctamethylene ether glycol, or a copolymer thereof, and the like. These may be used alone or in combination of two or more thereof.

### [Polyester]

Examples of the polyester include an aliphatic polyester, an aromatic polyester, and a copolymer thereof.

As the polyester, those produced by polycondensation of a dicarboxylic acid and a diol can be used.

Examples of the dicarboxylic acid include aliphatic dicarboxylic acids such as malonic acid, succinic acid, glutaric acid, adipic acid, pimelic acid, suberic acid, azelaic acid, and sebacic acid; alicyclic dicarboxylic acids such as 1,3-cyclopentanedicarboxylic acid and 1,4-cyclohexanedicarboxylic acid; and aromatic dicarboxylic acids such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, diphenylmethane-4,4'-dicarboxylic acid, diphenylsulfone-4,4'-dicarboxylic acid, and 4,4'-biphenyldicarboxylic acid. These may be used alone or in combination of two or more thereof.

Examples of the diol include aliphatic diols such as ethylene glycol, 1,2-propanediol, 1,3-propanediol, 1,2-butanediol, 1,3-butanediol, 1,4-butanediol, 2,3-butanediol, neopentyl glycol, 1,4-butenediol, 1,5-pentanediol, 1,6-hexanediol, 1,8-octanediol, 1,9-nonanediol, 1,10-decanediol, and 1,12-dodecanediol; alicyclic diols other than 1,4-cyclohexanedimethanol, such as 1,4-cyclohexanediol, hydrogenated bisphenol A (2,2-bis(4-hydroxycyclohexyl) propane), and adducts of these compounds with alkylene oxides having 2 or more and 4 or less carbon atoms (average addition mole number of 2 or more and 12 or less); and aromatic diols such as hydroquinone, bis(4-hydroxyphenyl) methane, 2,2-bis(4-hydroxyphenyl) propane, and 1,5-dihydroxynaphthalene. These may be used alone or in combination of two or more thereof.

Among the polyesters, an aliphatic polyester is preferable from the viewpoint of imparting more excellent flexibility to the polyamide block copolymer having the polymer block (A) as a hard segment and further improving the heat resistance of the polyamide block copolymer.

From the viewpoint of easily exhibiting excellent flexibility in the polyamide block copolymer, the polymer block (B) preferably contains a constituent unit derived from a polyether, and more preferably contains a constituent unit derived from a polyether diamine.

### [Molecular Weight]

The number average molecular weight of the polymer block (B) is preferably 200 to 5,000, more preferably 230 to 4,000, and still more preferably 300 to 2,000, or may be 350 to 1,500, or may be 350 to 1,000. When the number average molecular weight is within the above numerical range, the polymerization reaction with the polymer block (A) proceeds well, and the flexibility of the polyamide block copolymer can be further improved.

### <Method for Producing Polyamide Block Copolymer>

The method for producing a polyamide block copolymer of the present embodiment is characterized by mixing and polymerizing a polymer constituting a polymer block (A) containing 50 mol% or more of a constituent unit derived from the above-mentioned polyamide and a polymer constituting a polymer block (B) containing 50 mol% or more of a constituent unit derived from at least one selected from the group consisting of the above-mentioned polyether and polyester.

In addition, the method for producing a polyamide block copolymer of the present embodiment may include using the terminal functionalizing agent and/or the terminal blocking agent. For example, a polyamide block copolymer can be produced by dry-blending a polymer constituting the polymer block (A) and a polymer constituting the polymer block (B) in the presence of the terminal functionalizing agent and/or the terminal blocking agent, and melt-kneading the mixture. Alternatively, the semi-aromatic polyamide which is a polymer constituting the polymer block (A) may be reacted with the terminal functionalizing agent and/or the terminal blocking agent, and then pulverized to adjust the terminal functional group of the polymer block (A), and then the polymer constituting the polymer block (B) may be added and dry-blended, and the mixture may be melt-kneaded. Further, the semi-aromatic polyamide which is a polymer constituting the polymer block (A) and the terminal functionalizing agent and/or the terminal blocking agent may be charged from an upper hopper of a melt kneader and reacted, and then the polymer block (B) may be added from a side feed port on the downstream side of the extruder to perform stepwise melt kneading.

Usually, a method such as a melt polymerization method, a solid phase polymerization method, or a melt extrusion polymerization method can be employed. A solid phase polymerization method may be combined after the melt polymerization method or the melt extrusion polymerization method. As the melt extrusion polymerization method, a method of melt kneading using a single-screw extruder, a twin-screw extruder, a kneader, a Banbury mixer, or the like is preferably employed. The melt-kneading conditions are not particularly limited, but for example, a method of melt-kneading in a temperature range of about 0 to 60°C higher than the melting point of the polyamide for about 1 to 120 minutes is preferable from the viewpoint of further easily exhibiting the effect of the present invention.

For example, when the monomer of the polymer constituting the polymer block (A) is reacted with the polymer constituting the polymer block (B) in the presence of the terminal functionalizing agent, it is difficult to produce the polyamide block copolymer of the present embodiment. In this case, the polymer block (A) is not completely formed and becomes a randomized copolymer, and the physical properties to be exhibited by the polymer block (A) cannot be sufficiently exhibited, and excellent heat resistance cannot be imparted.

### <Mass Ratio (A)/(B)>

In the polyamide block copolymer of the present embodiment, the mass ratio (A)/(B) of the polymer block (A) to the polymer block (B) is in a range of 1/99 to 99/1. When the mass ratio (A)/(B) is out of the above range, excellent flexibility cannot be imparted to the polyamide block copolymer. From the viewpoint of achieving a balance between heat resistance and flexibility, the mass ratio (A)/(B) is preferably 5/95 to 95/5, more preferably 10/90 to 95/5, and still more preferably 20/80 to 95/5, or may be 30/70 to 95/5, may be 40/60 to 95/5, may be 40/60 to 90/10, may be 45/55 to 90/10, or may be 50/50 to 90/10.

### <Molecular Weight of Polyamide Block Copolymer>

The number average molecular weight of the polyamide block copolymer is preferably 3,000 to 40,000, more preferably 4,000 to 30,000, still more preferably 4,500 to 25,000, and even more preferably 5,000 to 20,000. The higher the molecular weight is, the more excellent the heat resistance is, but the molding processability tends to decrease. Within the above numerical range, the heat resistance of the polyamide block copolymer can be further improved, and good molding processability can be expected.

The weight average molecular weight of the polyamide block copolymer is preferably 40,000 to 200,000, more preferably 43,000 to 200,000, still more preferably 45,000 to 200,000, and even more preferably 50,000 to 200,000, or may be 50,000 to 150,000. Within the above numerical range, the polyamide block copolymer can be expected to exhibit tougher material properties and good molding processability.

The molecular weight distribution (weight average molecular weight/number average molecular weight) of the polyamide block copolymer is preferably 2.0 to 15.0, and more preferably 3.0 to 12.0. When the molecular weight distribution is within the above numerical range, the heat resistance of the polyamide block copolymer can be further improved, and good molding processability can be expected.

### <Physical Properties>

### [Melting Point]

The polyamide block copolymer has a melting point of 230°C or higher. When the melting point of the polyamide block copolymer is lower than 230°C, the heat resistance is poor. For example, the thermal stability of a molded article obtained using the polyamide block copolymer may be insufficient.

The melting point of the polyamide block copolymer is preferably 235°C or higher, and more preferably 240°C or higher. The upper limit of the melting point of the polyamide block copolymer is not particularly limited, but is preferably 315°C or lower from the viewpoint of moldability and the like.

### [Tensile Strength at Break]

The tensile strength at break of the polyamide block copolymers of the present embodiment measured in accordance with JIS K 7161-1:2014 is preferably 5 MPa or more, more preferably 10 MPa or more, and still more preferably 15 MPa or more.

As used herein, the tensile property is an index of mechanical strength and flexibility. When the tensile strength at break is 5 MPa or more, it can be said that the polyamide block copolymers have excellent mechanical strength.

More specifically, the tensile strength at break can be determined by the method described in Examples described later.

### [Tensile Elongation at Break]

The tensile elongation at break of the polyamide block copolymers of the present embodiment measured in accordance with JIS K 7161-1:2014 is preferably 30% or more, more preferably 50% or more, and still more preferably 100% or more, or may be 200% or more.

As used herein, the tensile property is an index of flexibility. When the tensile elongation at break is 30% or more, it can be said that the polyamide block copolymers have excellent flexibility.

More specifically, the tensile elongation at break can be determined by the method described in Examples described later.

### [Polyamide Block Copolymer Composition]

As one of the present embodiments, a polyamide block copolymer composition containing the polyamide block copolymer can be provided.

The polyamide block copolymer composition is produced by adding a component other than the polyamide block copolymer to the polyamide block copolymer. Examples of the component include additives such as an antioxidant, an antiozonant, a weathering stabilizer, an ultraviolet absorber, a hydrolysis-resistant stabilizer, a filler, a crystal nucleating agent, a reinforcing agent, carbon black, a pigment, an inorganic dye, an organic dye, a colorant, a coloring inhibitor, an antigelling agent, a delustering agent, an antistatic agent, a plasticizer, a lubricant, a mold release agent, a shrinkage resistance agent, a compatibilizer, a flame retardant, a flame retardant aid, and a foaming agent.

These additives may be contained alone or two or more kinds thereof may be contained. The content of the additive is not particularly limited as long as the effect of the present invention is not impaired, but can be set to 0.02 to 200 parts by mass with respect to 100 parts by mass of the polyamide block copolymer.

Examples of the method for adding the additive include a method in which the additive is added at the time of polymerization of the polyamide block copolymer, and a method in which the additive is dry-blended with the polyamide block copolymer and melt-kneaded.

### (Method for Producing Polyamide Block Copolymer Composition)

The method for producing the polyamide block copolymer composition is not particularly limited, and a method capable of uniformly mixing the polyamide block copolymer and the additive can be preferably employed. For the mixing, in general, a method of melt-kneading using a single screw extruder, a twin screw extruder, a kneader, a Banbury mixer, or the like is preferably employed. The melt-kneading conditions are not particularly limited, and examples thereof include a method of melt-kneading for about 1 to 120 minutes at a temperature in a range of about 0 to 60°C higher than the melting point of the polyamide block copolymer.

### [Molded Article]

As one of the present embodiments, a molded article composed of the polyamide block copolymer or the polyamide block copolymer composition can be provided.

The molded article of the present embodiment can be used as various molded articles of electric and electronic parts, automobile parts, industrial parts, fibers, films, sheets, household goods, and other arbitrary shapes and applications.

### <Applications>

Since the polyamide block copolymer and the polyamide block copolymer composition of the present embodiment exhibit flexibility and excellent heat resistance, they can be used in a wide range of fields where these physical properties are required. For example, the polyamide block copolymer and the polyamide block copolymer composition of the present embodiment can be widely used as materials for various parts such as electric and electronic parts, automobile parts, industrial material parts, industrial components, daily necessities, household goods, sports parts, leisure parts, and medical parts. In particular, the polyamide block copolymer and the polyamide block copolymer composition of the present embodiment can be applied as complex-shaped parts by injection molding, hollow molded parts by blow molding, hose and tube-shaped parts and films and sheets by extrusion molding, lightweight members and heat insulating materials by injection and/or extrusion foam molding, and additives for resin modification.

Among the electronic and electric parts, more specifically, the polyamide block copolymer and the polyamide block copolymer composition of the present embodiment can be used as a material for a hinge portion of a mobile phone and a game machine, a grip for a camera, a printer tractor belt, an electric wire coating, a tube for a home electric appliance, and the like.

Among the automobile parts, more specifically, the polyamide block copolymer and the polyamide block copolymer composition of the present embodiment can be used as a material for parts for constant velocity joint boots, curl cords, air-back doors, hydraulic hoses, shift levers, cable liners, automobile belts, fuel tether caps, door locks, steering switches, seat locks, accelerator pedals, air ducts, airless tires, tire frameworks, inner liners for tires, and the like.

Among the industrial material parts and/or industrial components, more specifically, the polyamide block copolymer and the polyamide block copolymer composition of the present embodiment can be used as a material for submersible pumps, sealing members, bushings, tubes, spiral tubes, diaphragms, mop joints, noiseless gears, mandrels, films, non-woven fabrics, monofilaments, ball joint sheets, resistor rods, fire hoses, conveyor belts, pulleys, wire cables, and the like.

Among the daily necessities and/or household goods, more specifically, the polyamide block copolymer and the polyamide block copolymer composition of the present embodiment can be used as a material for a hair dryer brush, a nail polish case, a hot curler, a fastener pull, a bobbin case, a console shutter, a corrugated tube, a corrugated hose, and the like.

Among the sports parts, more specifically, the polyamide block copolymer and the polyamide block copolymer composition of the present embodiment can be used as a material for running shoes, spiked shoes, ski boots, and the like.

Among the medical parts, more specifically, the polyamide block copolymer and the polyamide block copolymer composition of the present embodiment can be used as a material for medical catheters, wearable devices, optical products, eye care parts, and the like.

### Examples

Hereinafter, the present invention will be specifically described with reference to Examples and Comparative Examples, but the present invention is not limited thereto.

### <Measurement and Evaluation Method>

Various physical properties were measured or evaluated by the following methods.

### [Molecular Weight]

Each of the semi-aromatic polyamides to be used as the polymer block (A) produced in Synthesis Examples, the polyether to be used as the polymer block (B), and the polyamide block copolymers obtained in Examples and Comparative Examples was used as samples, and the number average molecular weight (Mn), the weight average molecular weight (Mw), and the molecular weight distribution (Mw/Mn) were determined as molecular weights in terms of standard polymethylmethacrylate by gel permeation chromatography (GPC).

A 1,1,1,3,3,3-hexafluoroisopropanol (HFIP) solution obtained by dissolving sodium trifluoroacetate at a ratio of 0.85 g per 1 kg of HFIP was used as an eluent. A sample (1.5 mg in terms of resin) was weighed and dissolved in 3 mL of the above eluent. A measurement sample was prepared by passing the solution through a 0.4 µm membrane filter. The measurement conditions were as follows.

### (Measurement Conditions)

Apparatus: HLC-8320GPC (manufactured by Tosoh Corporation)
Column: TSK gel Super HM-H (manufactured by Tosoh Corporation), Two columns were connected in series.
Eluent: 0.085% sodium trifluoroacetate/HFIP solution
Flow rate: 0.5 mL/min (reference column: 0.25 mL/min)
Sample injection volume: 30 µL
Column temperature: 40°C
Standard polymethylmethacrylate: ShodexStandard M-75 of Resonac Corporation, Polymethlmethacrylate molecular weight 1010 and molecular weight 535 of Agilent Technologies, Inc.
Detector: UV (254 nm) detector, UV (210 nm) detector

### [Measurement of Terminal Amino Group Content ([NH₂])]

Using the semi-aromatic polyamide produced in Synthesis Example as a sample, 1 g of the sample was dissolved in 35 mL of phenol, and 3 mL of methanol was mixed to prepare a sample solution. Using thymol blue as an indicator, titration was performed using a 0.01 or 0.1 N HCl aqueous solution, and the terminal amino group content ([NH₂], unit: µmol/g) was measured.

### [Measurement of Terminal Carboxy Group Content ([COOH])]

Using the semi-aromatic polyamide produced in Synthesis Example as a sample, 0.5 g of the sample was dissolved in 40 mL of orthocresol to prepare a sample solution. Using a potentiometric titrator, titration was performed using a 0.01 or 0.1 N KOH/EtOH solution, and the terminal carboxy group content ([COOH], unit: µmol/g) was measured.

### (Measurement Conditions)

Measurement apparatus: MCU-710M/S (manufactured by Kyoto Electronics Manufacturing Co., Ltd.)
Measurement unit: AT-710
Main control unit: MCU-710

### [Active Terminal Functional Group Content]

Using the respective functional group amounts [NH₂] and [COOH] of the semi-aromatic polyamide obtained by the measurement of the terminal amino group content and the measurement of the terminal carboxy group content, the parts by mass of the semi-aromatic polyamide ([parts by mass of PA]) shown in Table 3, and the parts by mass of the terminal functionalizing agent ([parts by mass of terminal functionalizing agent]), the active terminal functional group content of the polymer block (A) was calculated from the following

### <Formula>.

Note that it was confirmed that the terminal amino group of the semi-aromatic polyamide was quantitatively converted into a carboxy group by a terminal functionalizing agent (dicarboxylic acid monomer) described later. Active terminal functional group content (µmol/g) = ([NH2] + [COOH]) × ([Parts by mass of PA] ÷ ([Parts by mass of PA] + [Parts by mass of terminal functionalizing agent]))

### [Melting Point]

The semi-aromatic polyamides produced in Synthesis Examples and the polyamide block copolymers obtained in Examples and Comparative Examples were used as samples, respectively, and the melting points thereof were measured using a differential scanning calorimeter "DSC25" manufactured by TA Instruments, Inc.

The melting points were measured in accordance with ISO 11357-3 (2nd edition, 2011). To be specific, in a nitrogen atmosphere, a sample was heated from 30°C to 340°C at a rate of 10°C/min, held at 340°C for 5 minutes to completely melt the sample, then cooled to 50°C at a rate of 10°C/min, and held at 50°C for 5 minutes. The peak temperature of the melting peak appearing when the temperature was raised again to 340°C at a rate of 10°C/min was taken as the melting point (°C), and when there were a plurality of melting peaks, the peak temperature of the melting peak on the highest temperature side was taken as the melting point (°C).

### [Evaluation of Tensile Strength at Break and Tensile Elongation at Break]

Tensile evaluation was performed by the following method.

A small test piece type 1BA (2mm thickness) of each of the polyamide block copolymers obtained in Examples and Comparative Examples was allowed to stand in a dryer at 140°C for 6 hours, and then the tensile strength at break and the tensile elongation at break at 23°C were measured using an Instron universal tester ("Model 5566" manufactured by Instron).

Specifically, the test speed was set to 0.25 mm/min in a region where the distance between chucks was 25 mm and the strain was 0 to 0.3%, and then the test speed was set to 50 mm/min in a region where the strain was 0.3% or more. Note that as the tensile elongation at break, a value of a nominal strain was adopted.

### <Polymer Block (A)>

As constituent elements of the polymer block (A), PA-1 to PA-9 produced in the following Synthesis Examples were used.

### [Synthesis Example 1]

### Production of Semi-Aromatic Polyamide (PA-1)

1017.6 g (6.13 mol) of terephthalic acid, 988.2 g (6.24 mol) of a mixture of 1,9-nonanediamine and 2-methyl-1,8-octanediamine (molar ratio: 50/50), 18.2 g (0.15 mol) of benzoic acid, 2.0 g (0.1% by mass with respect to the total mass of the raw materials) of sodium hypophosphite monohydrate, and 788 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-1".

### [Synthesis Example 2]

### Production of Semi-Aromatic Polyamide (PA-2)

1015.6 g (6.11 mol) of terephthalic acid, 988.2 g (6.24 mol) of a mixture of 1,9-nonanediamine and 2-methyl-1,8-octanediamine (molar ratio: 80/20), 21.2 g (0.17 mol) of benzoic acid, 2.0 g (0.1% by mass with respect to the total mass of the raw materials) of sodium hypophosphite monohydrate, and 788 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-2".

### [Synthesis Example 3]

### Production of Semi-Aromatic Polyamide (PA-3)

991.1 g (5.97 mol) of terephthalic acid, 972.3 g (6.14 mol) of a mixture of 1,9-nonanediamine and 2-methyl-1,8-octanediamine (molar ratio: 85/15), 32.8 g (0.27 mol) of benzoic acid, 2.0 g (0.1% by mass with respect to the total mass of the raw materials) of sodium hypophosphite monohydrate, and 777 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-3".

### [Synthesis Example 4]

### Production of Semi-Aromatic Polyamide (PA-4)

1116.4 g (6.72 mol) of terephthalic acid, 886.4 g (5.60 mol) of a mixture of 1,9-nonanediamine and 2-methyl-1,8-octanediamine (molar ratio: 50/50), 2.0 g (0.1% by mass with respect to the total mass of the raw materials) of sodium hypophosphite monohydrate, and 780 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This was subjected to solid phase polymerization at 230°C and 13 Pa (0.1 mmHg) for 10 hours to obtain a polyamide. This polyamide is abbreviated as "PA-4".

### [Synthesis Example 5]

### Production of Semi-Aromatic Polyamide (PA-5)

1043.8 g (6.28 mol) of terephthalic acid, 965.5 g (6.10 mol) of a mixture of 1,9-nonanediamine and 2-methyl-1,8-octanediamine (molar ratio: 50/50), 2.0 g (0.1% by mass with respect to the total mass of the raw materials) of sodium hypophosphite monohydrate, and 782 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This was subjected to solid phase polymerization at 230°C and 13 Pa (0.1 mmHg) for 10 hours to obtain a polyamide. This polyamide is abbreviated as "PA-5".

### [Synthesis Example 6]

### Production of Semi-Aromatic Polyamide (PA-6)

836.7 g (3.87 mol) of 2,6-naphthalenedicarboxylic acid, 637.6 g (4.03 mol) of a mixture of 1,9-nonanediamine and 2-methyl-1,8-octanediamine (molar ratio: 85/15), 31.8 g (0.26 mol) of benzoic acid, 1.5 g (0.1% by mass with respect to the total mass of the raw materials) of sodium hypophosphite monohydrate, and 677 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-6".

### [Synthesis Example 7]

### Production of Semi-Aromatic Polyamide (PA-7)

732.7 g (4.41 mol) of terephthalic acid, 768.1 g (4.53 mol) of a mixture of 1,10-decanediamine and 2-methyl-1,8-octanediamine (molar ratio: 80/20), 22.0 g (0.18 mol) of benzoic acid, 1.5 g (0.1% by mass with respect to the total mass of the raw materials) of sodium hypophosphite monohydrate, and 593 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-7".

### [Synthesis Example 8]

### Production of Semi-Aromatic Polyamide (PA-8)

732.7 g (4.41 mol) of terephthalic acid, 730.0 g (4.53 mol) of a mixture of 1,10-decanediamine and hexamethylenediamine (molar ratio: 80/20), 22.0 g (0.18 mol) of benzoic acid, 1.5 g (0.1% by mass with respect to the total mass of the raw materials) of sodium hypophosphite monohydrate, and 578 mL of distilled water were put into an autoclave having an internal volume of 5 L, and nitrogen substitution was performed. The mixture was stirred at 100°C for 30 minutes, and the temperature inside the autoclave was raised to 220°C over 3 hours. At this time, the pressure inside the autoclave was increased to 2.0 MPa. Heating was continued for 2 hour while maintaining the pressure at 2.0 MPa, and the reaction was allowed to proceed by gradually removing the water vapor. The reaction was further carried out for 1 hour to obtain a prepolymer. The obtained prepolymer was dried at 120°C under reduced pressure for 24 hours, and pulverized to a particle size of 1 mm or less. This prepolymer is abbreviated as "PA-8".

### [Synthesis Example 9]

### Production of Semi-Aromatic Polyamide (PA-9)

PA-8 obtained in Synthesis Example 8 was subjected to solid phase polymerization at 230°C and 13 Pa (0.1 mmHg) for 10 hours to obtain a polyamide. This polyamide is abbreviated as "PA-9".

### [Monomer Mixture]

39.9 g (0.24 mol) of terephthalic acid, 31.7 g (0.20 mol) of a mixture of 1,9-nonanediamine and 2-methyl-1,8-octanediamine (molar ratio: 80/20), and 0.072 g (0.1% by mass with respect to the total mass of the raw materials) of sodium hypophosphite monohydrate were mixed and stirred. This mixture is abbreviated as "monomer mixture".

### [Terminal Functionalizing Agent]

Further, as a constituent element of the polymer block (A), the following dicarboxylic acid monomer was used as a terminal functionalizing agent.
·Adipic acid (abbreviated as "AA"): manufactured by Tokyo Chemical Industry Co., Ltd.
·Terephthalic acid (abbreviated as "TA"): manufactured by Tokyo Chemical Industry Co., Ltd.

Various physical property evaluations described above were performed on PA-1 to PA-9. The results are shown in Table 1 together with the physical properties of the terminal functionalizing agent.

The notation in Table 1 is as follows.

"n/i" indicates the molar ratio of linear diamine units/branched diamine units. In the columns of PA-8 and PA-9, "n/i" indicates the molar ratio of 1,10-decanediamine/hexamethylenediamine.
"[NH₂]" indicates the terminal amino group content.
"[COOH]" indicates the terminal carboxy group content.

**Table 1**

| | n/i | Mn | Mw | [NH₂] (µmol/g) | [COOH] (µmol/g) | Melting point (°C) |
|---|---|---|---|---|---|---|
| PA-1 | 50/50 | 1,500 | 3,500 | 520 | 580 | 264 |
| PA-2 | 80/20 | 600 | 2,300 | 940 | 1,060 | 298 |
| PA-3 | 85/15 | 400 | 2,600 | 760 | 900 | 304 |
| PA-4 | 50/50 | 1,500 | 7,000 | < 10 | 590 | 256 |
| PA-5 | 50/50 | 5,000 | 19,000 | < 10 | 260 | 263 |
| PA-6 | 85/15 | 500 | 1,500 | 960 | 1,100 | 306 |
| PA-7 | 80/20 | 500 | 1,400 | 1,850 | 2,000 | 299 |
| PA-8 | 80/20 | 500 | 1,500 | 1,600 | 1,700 | 303 |
| PA-9 | 80/20 | 5,500 | 16,000 | 40 | 90 | 304 |
| AA | - | 146 | - | - | 13,690 | - |
| TA | - | 166 | - | - | 12,040 | - |

### <Polymer Block (B)>

As the polymer block (B), the following PE-1 to PE-6 were used.

### [Polyether]

·PE-1: Polyether diamine, Jeffamine (registered trademark) ED-600 manufactured by Sigma-Aldrich Co. LLC.
·PE-2: Polyether diamine, Jeffamine (registered trademark) ED-900 manufactured by Sigma-Aldrich Co. LLC.
·PE-3: Polyoxypropylenediamine, D-400 manufactured by Sigma-Aldrich Co. LLC.
·PE-4: Polyoxyethylenediamine, PEGPA-400 manufactured by Koei Chemical Co., Ltd.
·PE-5: Polyoxyethylenediamine, PEGPA-1000 manufactured by Koei Chemical Co., Ltd.
·PE-6: Polyoxytetramethylenediamine, PTMGPA-1000 manufactured by Koei Chemical Co., Ltd.

The physical properties of the polymer block (B) are shown in Table 2.

The notation in Table 2 is as follows.
"[NH₂]" indicates the terminal amino group content.
"Tg" indicates a glass transition temperature measured by the following [Method for Measuring Glass Transition Temperature].
"< -70" indicates that the glass transition temperature is -70°C or lower because an inflection point cannot be confirmed in a range of -70°C or higher, which is the measurement limit of the apparatus. In addition, as a reference value, the glass transition temperature (based on literature values) of the polyether diol is described in Table 2. "~ -70" indicates a temperature between -80°C and -60°C, and "~ -85" indicates a temperature between -95°C and -75°C.

### [Method for Measuring Glass Transition Temperature]

The polymer block (B) was used as a sample, and the glass transition temperature of the sample was measured using a differential scanning calorimeter "DSC25" manufactured by TA Instruments, Inc.

The glass transition temperature was defined as a glass transition temperature (°C) which was a temperature of an inflection point appearing when the sample was cooled from 25°C to -90°C at a rate of 2°C/min under a nitrogen atmosphere, the sample was completely cooled by holding at -90°C for 10 minutes, and then the temperature was raised to 25°C at a rate of 2°C/min.

**Table 2**

| | Mn | [NH₂] (µmol/g) | Tg (°C) | Tg of polyether diol [based on literature values] (°C) |
|---|---|---|---|---|
| PE-1 | 500 | 4,000 | -73 | ~-70 |
| PE-2 | 900 | 2,222 | -66 | ~-70 |
| PE-3 | 430 | 4,651 | -76 | ~-70 |
| PE-4 | 400 | 5,000 | -70 | ~-70 |
| PE-5 | 1,000 | 2,000 | -74 | ~-70 |
| PE-6 | 1,000 | 2,000 | < -70 | ~ -85 |

### <Examples 1 to 16 and Comparative Example 1>

The respective components were mixed in advance in the proportions (parts by mass) shown in Table 3. The mixing was performed by dry blending for the solid samples and by swelling the solid samples for the liquid samples.

5 to 20 g of the prepared mixed samples were melt-kneaded and extruded at a cylinder temperature higher than the melting point of the polyamide by 0 to 60°C for 1 to 120 minutes using a table-top compact kneader/inj ection-molding machine ("Xplore MC1 5") manufactured by Xplore Instruments, and cooled and cut to produce a polyamide block copolymer in pellet form. As a test piece for tensile evaluation, a mixed sample prepared in the same manner as described above was melt-kneaded, and then a small test piece Type 1BA (2 mm thickness, full length 75 mm, parallel portion length 30 mm, parallel portion width 5 mm) for tensile evaluation was produced under the conditions of a mold temperature of 50 to 200°C and an injection pressure of 0.1 to 7.0 bar of an injection molding machine T runner mold.

The polyamide block copolymers obtained in the above Examples and Comparative Example were subjected to various physical property evaluations. The physical property evaluation results are shown in Table 3.

The notation in Table 3 is as follows.
"C9DA" indicates a 1,9-nonanediamine unit.
"MC8DA" indicates a 2-methyl-1,8-octanediamine unit.
"DDA" indicates a 1,10-decanediamine unit.
"HMDA" indicates a hexamethylenediamine unit.

**Table 3**

| | | Example | | | | | | | | | | | | | | | | Comparative Example |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 |
| Polymer block (A) (parts by mass) | PA-1 (C9DA/MC8DA = 50/50) | 74.0 | 63.7 | 76.2 | 77.2 | 61.5 | 61.1 | - | 63.2 | - | - | - | - | - | - | - | - | - |
| | PA-2 (C9DA/MC8DA = 80/20) | - | - | - | - | - | - | 49.1 | - | 48.7 | - | - | - | - | - | - | - | - |
| | PA-3 (C9DA/MC8DA = 85/15) | - | - | - | - | - | - | - | - | - | 53.3 | - | - | - | - | - | - | - |
| | PA-4 (C9DA/MC8DA = 50/50) | - | - | - | - | - | - | - | - | - | - | 78.9 | - | - | - | - | - | - |
| | PA-5 (C9DA/MC8DA = 50/50) | - | - | - | - | - | - | - | - | - | - | - | 89.5 | - | - | - | - | - |
| | PA-6 (C9DA/MC8DA = 85/15) | - | - | - | - | - | - | - | - | - | - | - | - | 47.9 | - | - | - | - |
| | PA-7 (DDA/MC8DA = 80/20) | - | - | - | - | - | - | - | - | - | - | - | - | - | 32.9 | - | - | - |
| | PA-8 (DDA/HMDA = 80/20) | - | - | - | - | - | - | - | - | - | - | - | - | - | - | 36.3 | - | - |
| | PA-9 (DDA/HMDA = 80/20) | - | - | - | - | - | - | - | - | - | - | - | - | - | - | - | 94.2 | - |
| | AA | 5.6 | 4.8 | 5.8 | 5.9 | 4.7 | - | 6.7 | - | - | - | - | - | - | - | - | - | - |
| | TA | - | - | - | - | - | 5.3 | - | 5.5 | 7.6 | 6.8 | - | - | 7.6 | 10.1 | 9.7 | 0.6 | - |
| Monomer mixture | (C9DA/MC8DA = 80/20) | - | - | - | - | - | - | - | - | - | - | - | - | - | - | - | - | 66.5 |
| [Active terminal functional group content of Polymer block (A)] (µmol/g) | | 1020 | 1020 | 1020 | 1020 | 1020 | 1010 | 1760 | 1010 | 1730 | 1480 | 590 | 260 | 1780 | 2950 | 2610 | 120 | - |
| Polymer block (B) (parts by mass) | PE-1 | 20.4 | - | - | - | - | - | - | - | - | - | - | - | - | - | - | - | - |
| | PE-2 | - | 31.5 | - | - | - | - | 44.2 | 31.3 | 43.7 | 39.9 | 21.1 | 10.5 | 44.4 | 57.0 | 54.0 | 5.3 | 33.5 |
| | PE-3 | - | - | 18.1 | - | - | - | - | - | - | - | - | - | - | - | - | - | - |
| | PE-4 | - | - | - | 170 | - | - | - | - | - | - | - | - | - | - | - | - | - |
| | PE-5 | - | - | - | - | 33.8 | - | - | - | - | - | - | - | - | - | - | - | - |
| | PE-6 | - | - | - | - | - | 33.6 | - | - | - | - | - | - | - | - | - | - | - |
| Polyamide block copolymer | Mass ratio (A)/(B) | 80/20 | 68/32 | 82/18 | 83/17 | 66/34 | 66/34 | 56/44 | 69/31 | 56/44 | 60/40 | 79/21 | 89/11 | 56/44 | 43/57 | 46/54 | 95/5 | 67/33 |
| | Number average molecular weight Mn | 6700 | 12000 | 10000 | 11000 | 8300 | 6000 | 10000 | 8700 | 12000 | 9600 | 15000 | 14000 | 6400 | 8400 | 7300 | 6800 | 400 |
| | Weight average molecular weight Mw | 72000 | 92000 | 70000 | 100000 | 68000 | 43000 | 83000 | 95000 | 84000 | 78000 | 120000 | 120000 | 74000 | 67000 | 67000 | 45000 | 21000 |
| | Molecular weight distribution Mw/Mn | 107 | 7.7 | 7.0 | 9.1 | 8.2 | 7.2 | 8.3 | 10.9 | 7.0 | 8.1 | 8.0 | 8.6 | 11.6 | 8.0 | 9.2 | 6.6 | 52.5 |
| Evaluation | Melting point (°C) | 241 | 244 | 243 | 243 | 246 | 257 | 246 | 249 | 277 | 284 | 257 | 263 | 260 | 247 | 253 | 299 | 224 |
| | Tensile strength at break (MPa) | 32 | 45 | 40 | 46 | 43 | 41 | 23 | 45 | 22 | 24 | 59 | 84 | 30 | 16 | 17 | 63 | - |
| | Tensile elongation at break (%) | 242 | 373 | 36 | 210 | 407 | 49 | 400 | 400 | 248 | 149 | 162 | 56 | 387 | 111 | 133 | 47 | - |

From the results of Table 3, the polyamide block copolymers obtained in Examples 1 to 16 had excellent heat resistance and excellent flexibility. On the other hand, the polyamide block copolymer obtained in Comparative Example 1 was difficult to melt-process, had poor heat resistance, and was a hard and brittle material, and therefore, the measurement of the tensile test was not possible.

From the results of Examples 8 to 12 and Comparative Example 1, it can be seen that when the polymer block (A) has a small molecular weight, specifically, when polymerization is carried out using a monomer mixture, the polymer block (A) has poor melt processability with the polymer block (B), and the obtained polyamide block copolymer has a small molecular weight and is inferior in heat resistance and flexibility.

From these results, it can be seen that in order to enable melt processing and further improve heat resistance and flexibility, it is important as a particularly preferred embodiment of the present invention that the polymer block (A) has a molecular weight of a certain value or more, the polymer block (A) has a melting point of a certain temperature or lower, and the polymerization reaction temperature between the polymer block (A) and the polymer block (B) is a certain temperature or lower.

According to the above results, the polyamide block copolymer disclosed in PTL 1, in which a monomer mixture corresponding to Comparative Example 1 is used, is not preferable from the viewpoints of melt processability, heat resistance, and flexibility.

### Industrial Applicability

The polyamide block copolymer obtained by the reaction between the polymer block (A) and the polymer block (B) of the present embodiment exhibits flexibility and is excellent in heat resistance. Therefore, the polyamide block copolymer and the polyamide block copolymer composition of the present embodiment can be widely used as materials for various parts such as electric and electronic parts, automobile parts, industrial material parts, industrial components, daily necessities, household goods, sports parts, leisure parts, and medical parts. In particular, the polyamide block copolymer and the polyamide block copolymer composition of the present embodiment can be applied as complex-shaped parts by injection molding, hollow molded parts by blow molding, hose and tube-shaped parts and films and sheets by extrusion molding, lightweight members and heat insulating materials by injection and/or

extrusion foam molding, and additives for resin modification.

## Claims

1. A polyamide block copolymer comprising: a polymer block (A) comprising 50 mol% or more of a constituent unit derived from polyamide; and a polymer block (B) comprising 50 mol% or more of a constituent unit derived from at least one selected from the group consisting of polyether and polyester, wherein the polymer block (B) has a glass transition temperature of 20°C or lower and the polyamide block copolymer has a melting point of 230°C or higher.

2. The polyamide block copolymer according to claim 1, wherein the polyamide is a semi-aromatic polyamide.

3. The polyamide block copolymer according to claim 2, wherein the semi-aromatic polyamide comprises a diamine unit having an aliphatic diamine unit as a main component and a dicarboxylic acid unit having an aromatic dicarboxylic acid unit as a main component.

4. The polyamide block copolymer according to claim 2 or 3, wherein the semi-aromatic polyamide comprises a diamine unit derived from an aliphatic diamine having 4 to 18 carbon atoms in an amount of 30 mol% or more with respect to the total diamine units.

5. The polyamide block copolymer according to any one of claims 2 to 4, wherein the semi-aromatic polyamide comprises a diamine unit derived from at least one selected from the group consisting of 1,9-nonanediamine and 2-methyl-1,8-octanediamine.

6. The polyamide block copolymer according to any one of claims 2 to 5, wherein the semi-aromatic polyamide comprises a dicarboxylic acid unit derived from at least one selected from the group consisting of terephthalic acid, 1,4-naphthalenedicarboxylic acid, 2,6-naphthalenedicarboxylic acid, and 2,7-naphthalenedicarboxylic acid.

7. The polyamide block copolymer according to any one of claims 1 to 6, wherein the polymer block (B) comprises a constituent unit derived from a polyether diamine.

8. The polyamide block copolymer according to any one of claims 1 to 7, wherein the polymer block (A) has an active terminal functional group content of 50 to 5,000 µmol/g.

9. The polyamide block copolymer according to any one of claims 1 to 8, wherein the polymer block (A) has a weight average molecular weight of 1,000 to 50,000.

10. The polyamide block copolymer according to any one of claims 1 to 9, having a weight average molecular weight of 40,000 to 200,000.

11. The polyamide block copolymer according to any one of claims 1 to 10, wherein a tensile elongation at break measured in accordance with JIS K 7161-1:2014 is 30% or more.

12. A polyamide block copolymer composition comprising the polyamide block copolymer according to any one of claims 1 to 11.

13. A molded article comprising the polyamide block copolymer according to any one of claims 1 to 11 or the polyamide block copolymer composition according to claim 12.

14. A method for producing the polyamide block copolymer according to claim 1, the method comprising mixing and polymerizing a polymer constituting a polymer block (A) comprising 50 mol% or more of a constituent unit derived from a polyamide and a polymer constituting a polymer block (B) comprising 50 mol% or more of a constituent unit derived from at least one selected from the group consisting of a polyether and a polyester.
